# EUROPÄISCHE PATENTSCHRIFT

(11) **EP 3 837 515 B1**
(45) Veröffentlichungstag und Bekanntmachung des Hinweises auf die Patenterteilung: **05.04.2023**
(21) Anmeldenummer: 19749254.9
(22) Anmeldetag: 19.07.2019
(51) Int. Cl.: G01K 1/143, G01K 7/42, G01K 13/02, G01K 7/02, G01K 1/08

(54) **TEMPERATURMESSEINRICHTUNG UND VERFAHREN ZUR TEMPERATURBESTIMMUNG**
TEMPERATURE MEASURING DEVICE AND METHOD FOR DETERMINING TEMPERATURE
DISPOSITIF DE MESURE DE TEMPÉRATURE ET PROCÉDÉ DE DÉTERMINATION DE TEMPÉRATURE

(30) Priorität: 15.08.2018 DE 102018119857
(43) Veröffentlichungstag der Anmeldung: 23.06.2021
(73) Patentinhaber: ABB Schweiz AG, 5400 Baden (CH)
(72) Erfinder: GEBHARDT, Jörg, 55130 Mainz (DE); UDE, Peter, 63457 Hanau (DE); DAAKE, Wilhelm, 32469 Petershagen (DE); TABELANDER, Stefan, 32052 Herford (DE); MERLIN, Tilo, 63589 Linsengericht (DE)
(74) Vertreter: Maiwald GmbH
(86) Internationale Anmeldenummer: PCT/EP2019/069574
(87) Internationale Veröffentlichungsnummer: WO 2020/035260

(56) Entgegenhaltungen:
- EP-A1- 3 087 304
- DD-A1- 87 677
- DE-A1- 2 327 557
- DE-A1- 19 800 753
- DE-A1-102011 086 974
- DE-B3-102004 034 186
- DE-T2- 3 878 304
- US-A- 5 879 082
- "MESSEN NICHTELEKTRISHCER GROSSEN", TASCHENBUCH DER MESSTECHNIK, XX, XX, 1 January 1998 (1998-01-01), pages 132-135, XP000921164,

## Beschreibung

Die Erfindung betrifft eine Temperaturmesseinrichtung zur Bestimmung einer Mediumstemperatur über die Temperatur einer das Medium umschließenden Oberfläche, umfassend mindestens einen Messsensor und mindestens einen Referenzsensor. Des Weiteren betrifft die Erfindung ein Verfahren zur Bestimmung einer Mediumstemperatur.

Bei der industriellen Prozessmesstechnik sind Temperaturmesseinrichtungen bekannt, bei denen ein oder mehrere Temperatursensoren in einem Schutzrohr montiert sind, welches zumindest teilweise in den Innenraum der Rohrleitung oder eines Behälters hineinragt. Hierfür muss in das Rohr oder den Behälter eine Öffnung mit zugehöriger Abdichtung der Temperaturmesseinrichtung vorgesehen werden.

Diese invasiven Messanordnungen haben den Nachteil, dass Bauteile in den Prozessraum hineinragen und es dadurch zu Strömungsenergieverlusten, Abrasion, Bruchschäden, Behinderung der Reinigungsvorgänge und potentielle Leckagen kommen kann. Außerdem ist gegebenenfalls der Explosionsschutz bei jeder Rohr- und Behälteröffnung zu betrachten.

Das Einsatzgebiet der Erfindung erstreckt sich auf Temperaturmesseinrichtungen, bei denen ein Oberflächentemperatursensor auf einer Oberfläche aufliegt, um die Temperatur eines darunter bzw. dahinter liegenden Mediums zu bestimmen. Idealerweise sollte ein solcher Sensor die Temperatur des Mediums annehmen, welches von der Oberfläche umschlossen wird. Ist der Temperatursensor beispielsweise als elektrisches Thermoelement ausgebildet, so kann durch Messung der Thermospannung auf die Temperatur des Sensors und somit auf die Temperatur des Mediums geschlossen werden, sofern sich beide im thermischen Gleichgewicht befinden, also die gleiche Temperatur aufweisen.

Aus der DE 198 00 753 A1 ist eine nicht-invasive Temperaturmesseinrichtung mit einem Messsensor und einem Referenzsensor bekannt, bei der der Messsensor mit der Messstelle verbunden ist, der Referenzsensor auf Umgebungstemperatur gehalten ist und der Messsensor und der Referenzsensor mit einem thermischen Isolationsmaterial beabstandet sind.

Nachteilhaft aus dieser, aus dem allgemein bekannten Stand der Technik bekannten, Vorgehensweise ist, dass der Oberflächentemperatursensor thermisch nicht nur mit der Oberfläche sondern auch mit seiner Umgebung, beispielsweise der umgebenden Luft, wechselwirkt. Aufgrund dessen misst der Oberflächentemperatursensor in der Praxis weder die Temperatur des Mediums, noch der Oberfläche, sondern eine Mischtemperatur, die zwischen der Temperatur des Mediums und der Umgebungstemperatur liegt. Üblicherweise ist der Referenztemperatursensor weit entfernt vom Prozess, im allgemeinen im Transmitterkopf, montiert.

Dabei ist zu berücksichtigen, dass Umgebungstemperaturänderungen, die auch auf die mechanische Verbindung zwischen Sensor und Transmitterkopf wirken, die Messgenauigkeit erheblich reduzieren können. Daher werden sie dann häufig mit einer thermischen Isolation versehen, deren tatsächliche Wirkung im Anwendungsfall meistens nicht bekannt ist.

Auch bei Änderungen der Prozeßtemperatur erreicht ein weit vom Prozeß entfernter Referenz-Temperatursensor nur äußerst langsam seinen neuen thermischen Gleichgewichtswert. Das bedeutet für einen Kompensationsalgorithmus oft ein Verzögerungsverhalten über etliche Minuten.

Aus der DD 87 677 B1 ist eine Temperaturmesseinrichtung zur Bestimmung der Temperatur von flüssigen und zähflüssigen Massen bekannt, welche neben einem Sensor in der Spitze eines in das Medium eintauchenden stabförmigen Temperaturfühlers einen zweiten Sensor im Schaft des Fühlers umfasst. Die Einrichtung weist eine Recheneinheit mit darauf elektronisch hinterlegter Näherungsformel zur Errechnung einer Mediumstemperaturnäherung auf, wobei die Näherungsformel als Summe aus der Mischtemperatur und einem Produkt aus zwei Faktoren, der eine Faktor sich aus der Differenz von der Mischtemperatur und der Umgebungstemperatur ergebend und der zweite Faktor ein Kalibrierungsfaktor darstellend, hinterlegt ist.

In der US 2007/0206655 A1 sind eine Einrichtung und Verfahren zur Bestimmung der menschlichen Körpertemperatur beschrieben, wobei die Einrichtung auf der Körperoberfläche angeordnet ist. Dabei geht die vermittelte technische Lehre davon aus, dass physikalische Eigenschaften des Messobjekts - insbesondere der Wärmeübergangswiderstand der Haut - in einer gewissen Toleranz hinreichend genau bekannt sind. Ferner wird die korrekte Platzierung der Einrichtung an einer vorgegebenen Messstelle vorausgesetzt. Offensichtlichen Unsicherheiten bei der Platzierung und dem Wärmeübergangswiderstand werden mit einem ein- oder zweidimensionalen Sensorarray zumindest zur Bestimmung der Oberflächentemperatur begegnet. Ferner sieht die vermittelte technische Lehre eine thermisch isolierende Zwischenschicht zwischen den Messstellen für die Oberflächentemperatur und die Umgebungstemperatur vor, deren Eigenschaften - insbesondere deren Wärmeübergangswiderstand - hinreichend bekannt ist, weil die Schichtstärke und das verwendete Material bekannt sind. Vor dem Hintergrund bekannter physikalischer Eigenschaften sieht die technische Lehre die Bestimmung der Körpertemperatur aus der ortsgebundenen Oberflächentemperatur und der Umgebungstemperatur mit Hilfe von bekannten Wärmeübergangswiderständen vor. Abgesehen von der Untauglichkeit der offenbarten Materialien im industriellen Bereich, insbesondere im Hochtemperaturbereich > 400°C, sind die bestimmenden Wärmeübergangswiderstände im Bereich industrieller Temperaturmesstechnik regelmäßig völlig unbekannt.

Darüber hinaus ist aus dem deutschen Gebrauchsmuster DE 299 18 228 U1 ein Temperaturmesselement mit einer Mehrzahl von Temperatursensoren bekannt, die mit unterschiedlichem Anstand zur Messstelle angeordnet sind.

In der US 6,220,750 B1 ist eine nichtinvasive Temperaturmesseinrichtung beschrieben, bei der zwei Temperatursensoren in unterschiedlichem Abstand zur Messstelle in einem in sich gegen die Umgebung abgeschlossenen Gehäuse untergebracht sind, wobei das Gehäuse auch eine Heizvorrichtung umfasst, welche zur Kompensation der Temperaturdifferenz der beiden Temperatursensoren betrieben wird.

Aus der WO 2014/164251 A1 ist eine Temperaturmesseinrichtung mit zwei Temperatursensoren bekannt, welche in einem gemeinsamen Gehäuse von der Messtelle beabstandet auf einen gemeinsamen Träger montiert sind, wobei einer der Temperatursensoren über ein thermisches Leitelement thermisch mit der Messstelle verbunden ist.

Schließlich ist aus der DE 10 2011 086974 A1 eine Temperaturmesssonde bekannt, mit welcher auch unter Vakuumbedingungen große und schnelle Temperaturänderungen messbar sind. Um die Temperatur schnell messen zu können, offenbart die DE 10 2011 086974 A1 eine Heiz- beziehungsweise Kühlvorrichtung, so dass die Messsonde schnell auf die zu messende Temperatur aufgewärmt beziehungsweise abgekühlt werden kann. Um die Messsonde auf die Messtemperatur zu erwärmen, ist dabei ein zweiter Messsensor vorgesehen, welcher beabstandet zu dem ersten Messsensor angeordnet ist, sodass eine weitere Temperatur gemessen wird. Aufgrund der Temperaturdifferenz zwischen dem ersten Messsensor und dem zweiten Sensor wird die Heizvorrichtung so lange aufgeheizt, bis die Temperaturdifferenz null ist. Mit anderen Worten, der zweite Temperatursensor wird durch die Heizvorrichtung auf die Temperatur des ersten Messsensors und damit der Temperatur des zu messenden Objekts gebracht.

Es ist die Aufgabe der vorliegenden Erfindung, eine Temperaturmesseinrichtung zur nicht-invasiven Messung einer Mediumstemperatur durch eine das Medium umgebende Gehäusewand unter reproduzierbaren thermischen Verhältnissen an der Messstelle anzugeben, deren dynamische Messgenauigkeit verbessert ist.

Die Aufgabe wird ausgehend von einer Temperaturmesseinrichtung gemäß Anspruch 1 gelöst. Vorteilhafte Ausgestaltungen der Erfindung sind in rückbezogenen Ansprüchen angegeben.

Die Erfindung geht aus von mindestens einer Temperaturmesseinrichtung zur Bestimmung einer Mediumstemperatur über die Temperatur einer das Medium umschließenden Oberfläche, umfassend mindestens einen auf der Oberfläche aufliegenden Messsensor und mindestens einen von dem Medium thermisch beabstandeten Referenzsensor, wobei der mindestens eine Messsensor über eine erste Zuleitung und der mindestens eine Referenzsensor über eine zweite Zuleitung mit einem gemeinsamen Messwertverarbeitungsmittel, welches die Umgebungstemperatur aufweist, verbunden sind.

Erfindungsgemäß sind die erste und zweite Zuleitung jeweils als mineralisolierte Mantelleitung mit einem Außenmantel aus Metall ausgebildet, wobei der Außenmantel mindestens zwei Innenleiter umschließt, welche mit hochkomprimiertem Metalloxidpulver gegen den Außenmantel isoliert sind. Der mindestens eine Messsensor ist mit den Innenleitern der ersten Zuleitung und der mindestens eine Referenzsensor ist mit den Innenleitern der zweiten Zuleitung verbunden. Zum Schutz des Messsensors beziehungsweise des Referenzsensors ist das sensortragende Ende der jeweiligen Mantelleitung mit einer den jeweiligen Sensor umschließenden Metallkappe versehen, die dicht mit dem Außenmantel der jeweiligen Mantelleitung verbunden ist. Im Rahmen dieser Offenbarung wird diese Metallkappe dem Außenmantel der jeweiligen Mantelleitung zugerechnet.

Erfindungsgemäß ist der Außenmantel der ersten Zuleitung mit dem Außenmantel der zweiten Zuleitung nahe der Messstelle auf der das Medium umschließenden Oberfläche mit mindestens einem Koppelelement verbunden.

Erfindungsgemäß sind der mindestens eine Messsensor und der mindestens eine Referenzsensor zwischen der das Medium umschließenden Oberfläche und dem Koppelelement derart angeordnet, dass der Wärmewiderstand zwischen dem mindestens einen Messsensor und dem Koppelelement größer ist als der Wärmewiderstand zwischen dem mindestens einen Referenzsensor und dem Koppelelement.

Vorteilhafterweise liegen im Ergebnis der erfindungsgemäßen Ausbildung der Temperaturmesseinrichtung in dem Bereich zwischen dem Koppelelement und der das Medium umschließenden Oberfläche reproduzierbare thermische Verhältnissen an der Messstelle unabhängig von der Länge der Mantelleitungen und somit unabhängig vom Abstand der Umgebungstemperatur von der Messstelle vor.

Darüber hinaus wird durch die Nähe des mindestens einen Referenzsensors zum mindestens einen Messsensor eine hohe dynamische Messgenauigkeit erreicht.

Erfindungsgemäß sind der mindestens eine Messsensor und der mindestens eine Referenzsensor in verschiedenen Abständen mit demselben wärmeleitfähigen Koppelelement thermisch verbunden, welches zwischen dem mindestens eine Messsensor und dem gemeinsamen Messwertverarbeitungsmittel angeordnet ist. Mit anderen Worten sind der mindestens eine Messsensor und der mindestens eine Referenzsensor auf demselben thermischen Leitweg zwischen dem Medium und dem gemeinsamen Messwertverarbeitungsmittel angeordnet. Während der bekannte Stand der Technik den Fachmann lehrt, den mindestens einen Referenzsensor möglichst auf der Umgebungstemperatur oder zumindest nahe der Umgebungstemperatur zu halten, hat sich in überraschender Weise herausgestellt, dass diese baulich aufwändige Anordnung nicht nur verzichtbar ist sondern auch zu einem schlechten Ansprechverhalten der Temperaturmesseinrichtung führt. Vielmehr genügt es, den thermischen Leitweg zwischen der zu bestimmenden Prozesstemperatur des Mediums und der Umgebungstemperatur des gemeinsamen Messwertverarbeitungsmittels nach Art eines Spannungsteilers, an dessen Abgriff der mindestens eine Referenzsensor angeordnet ist, anzuzapfen.

Dies wird erreicht, indem der mindestens eine Messsensor und der mindestens eine Referenzsensor zwischen der das Medium umschließenden Oberfläche und dem Koppelelement erfindungsgemäß derart angeordnet sind, dass der Wärmewiderstand zwischen dem mindestens einen Messsensor und dem Koppelelement größer ist als der Wärmewiderstand zwischen dem mindestens einen Referenzsensor und dem Koppelelement.

Da der Messsensor und der mindestens eine Referenzsensor erfindungsgemäß mit demselben wärmeleitfähigen Element thermisch verbunden sind, wirken sich Temperaturänderungen sowohl bei der Prozesstemperatur des Mediums als auch der Umgebungstemperatur gleichzeitig auf beide Sensoren jedoch in unterschiedlicher Quantität aus. Dadurch wird das Ansprechverhalten auf jedwede Temperaturänderungen unabhängig von eventuellen thermischen Isolierungen des Behälters nachhaltig verbessert.

In einer besonders vorteilhafter Ausgestaltung der Erfindung sind sowohl der mindestens eine Messsensor als auch der mindestens eine Referenzsensor als handelsübliche Messeinsätze für die industrielle Temperaturmessung, sogenannte Insets, ausgebildet. Insbesondere für Hochtemperaturmessungen bestehen diese Messeinsätze aus einer mineralisolierten Mantelleitung, welche an einem Ende mit einem temperatursensitiven Element ausgestattet ist oder deren innenliegende, einseitig verbundene Leiter bereits ein Thermoelement bilden. Bei derartigen Messeinsätzen, die im industriellen Umfeld erforderliche Robustheit sowie Temperaturbeständigkeit, insbesondere oberhalb 200°C, aufweisen müssen, können Standard-Kabel und -Isolationsmaterialien nicht benutzt werden.

Darüber hinaus führt die erfindungsgemäße Anordnung zu einer kompakten Bauform der Temperaturmesseinrichtung, da sowohl der mindestens eine Messsensor als auch der mindestens eine Referenzsensor auf demselben Weg zwischen der Messstelle am Behälter und dem Messwertverarbeitungsmittel angeordnet sind.

Im Einzelnen ist der mindestens eine Messsensor über eine gut wärmeleitende Verbindung, etwa mit einem Wärmewidestand **R3**, mit der Messtelle am Behälter verbunden. Gegenüber den Koppelelement ist der mindestens eine Messsensor mit einen Wärmewidestand **R1** angekoppelt.

Der mindestens eine Referenzsensor ist von der Messtelle am Behälter beabstandet auf dem hauptsächlichen thermischen Verbindungspfad zwischen der Messtelle am Behälter und dem Koppelelement nahe der Messstelle angeordnet. Dabei werden die auf den mindestens einen Messsensor wirkenden Umgebungseinflüsse weitgehend vollständig erfasst. Im Einzelnen besteht zwischen dem mindestens einen Referenzsensor ein Wärmewidestand **R2** zum Koppelelement und ein Wärmewidestand **R4** zur Messstelle.

In einer solchen Messanordnung kann die Wärmeleitung von der Meßstelle über das Koppelelement nach außen - der Umgebung im Sinne eines thermischen Reservoirs - oder umgekehrt nach innen - bei kalten Prozessen - in guter Näherung durch eine lineare Aneinanderreihung von thermischen Widerständen entlang dieses Pfades beschrieben werden. Es treten nur in geringem Maße seitliche Wärmefluß-Leckagen oder Zuflüsse auf.

Der Referenzsensor ist zwischen dem Koppelelement und dem Messsensor platziert. Der jeweilige Referenzsensor hat dabei vorteilhafterweise einen wohl definierten Wärmewidestand **R4** zur Messstelle und einen wohl definierten Wärmewiderstand **R2** zum Koppelelement. Im Falle von Standard-Thermometer-Insets sind diese Wärmewiderstände ungefähr proportional zur Länge des Insets zwischen den jeweiligen Temperaturmesspunkten.

Zusammengefasst besteht der Unterschied der vorliegenden Erfindung zum bekannten Stand der Technik darin, den mindestens einen Referenzsensor nicht mehr wie bisher weit vom Prozess entfernt einzubauen sondern so, dass bezogen auf einen internen Referenzpunkt, welcher durch das Koppelelement gebildet und weitgehend unabhängig von der Umgebungstemperatur ist, gilt **R1** > **R2**.

Durch die gewählte Anordnung ergeben sich mit und ohne Isolation des Behälters sowohl bei konstanter als auch bei veränderlicher Oberflächentemperatur nur geringe Abweichungen von der jeweiligen Ist-Temperatur der Oberfläche. Der Fall ohne Isolation ist oft tolerabel, weil die Sensoranordnung vorteilhafterweise von einer Haltekonstruktion aus mäßig wärmeleitendem Metall, wie etwa Edelstahl, umgeben sein kann. Eine solche Haltekonstruktion kann aus einem Metall-Rohradapter bestehen, der zum Beispiel mit Metallbändern am Rohr befestigt wird, und zusätzlich auch aus einem sogenenannten "Halsrohr". Die Sensoranordnung mit dem für das Meßprinzip wesentlichen Wärmepfad kann dann im allgemeinen durch eine Luftschicht beispielsweise vom Halsrohr und vom Rohradapter getrennt sein. Dadurch wird die Dominanz des thermischen Haupt-Weges entlang der Sensoren vorteilhaft beeinflußt, denn die Luftschichten wirken bereits stark thermisch isolierend.

Im Ergebnis genügt dann eine quasi-statische Temperaturkompensation zur Berechnung der Oberflächentemperatur auch bei schnellen Änderungen der letzteren. Die Bildung zeitlicher Ableitungen der Messsignale, welche im Allgemeinen große Probleme bereiten können, weil sie das Messrauschen verstärken, sind vorteilhafterweise verzichtbar.

Die Berechnung der Oberflächentemperatur aus den Messsignalen des Messsensors und des Referenzsensors erfolgt mit für sich bekannten Methoden, wie sie beispielsweise in der DE 10 2014 019 365 beschrieben sind.

Als besonders vorteilhaft hat sich eine Temperaturmesseinrichtung erwiesen, bei der der Referenzsensor dem Messsensor zumindest thermisch näherliegt als dem Messwertverarbeitungsmittel. Dies wird durch das Koppelelement erreicht, das nahe der Messstelle mindestens einen Messsensor und mindestens einen Referenzsensor zwischen dem Koppelelement und der Messtelle einschliesst. Somit ist bei allen wärmeleitfähigen Verbindungen zwischen dem Messsensor und dem Messwertverarbeitungsmittel, deren Wärmewiderstände ungefähr proportional zur Länge sind - dazu gehören insbesondere aber nicht abschließend die oben erwähnten mineralisolierten Mantelleitungen -, der geometrische Abstand des Referenzsensors zum Messsensor geringer als der geometrische Abstand des Referenzsensors zum Messwertverarbeitungsmittel.

Überraschenderweise hat sich als besonders vorteilhaft herausgestellt, wenn das Verhältnis der Wärmewiderstände **R1/R2** > 10 ist. Somit ist bei allen wärmeleitfähigen Verbindungen zwischen dem Messsensor und dem Messwertverarbeitungsmittel, deren Wärmewiderstände ungefähr proportional zur Länge sind - dazu gehören insbesondere aber nicht abschließend die oben erwähnten mineralisolierten Mantelleitungen -, der geometrische Abstand des Referenzsensors zum Messsensor viel geringer als der geometrische Abstand des Referenzsensors zum Messwertverarbeitungsmittel.

Selbst bei einem Verhältnis der Wärmewiderstände **R1/R2** > 50 treten die oben erwähnten Vorteile der erfindungsgemäßen Temperaturmesseinrichtung ein. Dabei ist der Referenzsensor geometrisch nur geringfügig vom Messsensor beabstandet. Vorteilhafterweise begünstigt eine solche Anordnung die Miniaturisierung sowie kompakte Bauformen der Temperaturmesseinrichtung. Besonders vorteilhaft ist die Unterbringung des Messsensors und des Referenzsensors in einem gemeinsamen Gehäuse.

Erfindungsgemäß ist der Wärmewiderstand **R3** zwischen dem Messsensor und der Messstelle auf der das Medium umschließenden Oberfläche kleiner als der Wärmewiderstand **R4** zwischen dem Referenzsensor und der Messstelle auf der das Medium umschließenden Oberfläche.

Überraschenderweise hat sich als besonders vorteilhaft herausgestellt, wenn das Verhältnis der Wärmewiderstände **R4/R3** < 10 ist. Somit ist bei allen wärmeleitfähigen Verbindungen zwischen dem Messsensor und dem Koppelelement, deren Wärmewiderstände ungefähr proportional zur Länge sind - dazu gehören insbesondere aber nicht abschließend die oben erwähnten mineralisolierten Mantelleitungen -, der geometrische Abstand des Referenzsensors zum Messsensor viel geringer als der geometrische Abstand des Referenzsensors zum Koppelelement. Selbst bei einem Verhältnis der Wärmewiderstände **R4/R3** < 50 treten die oben erwähnten Vorteile der erfindungsgemäßen Temperaturmesseinrichtung ein. Dabei ist der Referenzsensor geometrisch nur geringfügig vom Messsensor beabstandet.

Vorteilhafterweise begünstigt eine solche Anordnung die Miniaturisierung sowie kompakte Bauformen der Temperaturmesseinrichtung. Besonders vorteilhaft ist die Unterbringung des Messsensors und des Referenzsensors in einem gemeinsamen Gehäuse.

Nach einem weiteren Merkmal der Erfindung ist das Verhältnis des Wärmewiderstands **R1** zwischen dem Messsensor und dem Koppelelement und des Wärmewiderstands **R3** zwischen dem Messsensor und der Messstelle auf der das Medium umschließenden Oberfläche größer als das Verhältnis des Wärmewiderstands **R2** zwischen dem Referenzsensor und dem Koppelelement und des Wärmewiderstands **R4** zwischen dem Referenzsensor und der Messstelle auf der das Medium umschließenden Oberfläche **R1/R3** > **R2/R4.**

Erfindungsgemäß ist auf dem hauptsächlichen thermischen Verbindungspfad zwischen der Messtelle am Behälter und der Umgebung mindestens ein weiterer Referenzsensor angeordnet. Mit jeder zusätzlichen Referenztemperatur wird die Genauigkeit der Temperaturmesseinrichtung verbessert. Darüber hinaus ermöglichen zusätzliche Referenztemperaturen auch Diagnosen, ob die Isolierung hinreichend ist, die Montage oder Umgebungsbedingungen den Anforderungen entsprechen oder wie eindimensional der thermische Pfad ist.

Nach einem weiteren Merkmal der Erfindung sind verschiedene Sensorelement-Typen, wie Widerstandsthermometer (Kalt- oder Heißleiter), Thermoelemente, für den Messsensor und den Referenzsensor in beliebiger Misschung in derselben Temperaturmesseinrichtung zulässig.

Nach einem weiteren Merkmal der Erfindung ist der Winkel der Temperaturmesseinrichtung zur Messoberfläche beliebig wählbar. Die Messanordnung kann sowohl senkrecht als auch parallel oder in jedem anderen Winkeln zur Meßoberfläche angeordnet werden. Vorteilhafterweise sind somit auch Messstellen an schwer zugänglichen Messorten bedienbar.

Die Erfindung wird nachstehend anhand von Ausführungsbeispielen näher erläutert.

Die dazu erforderlichen Zeichnungen zeigen:
- Figur 1: eine Prinzipdarstellung einer Temperaturmesseinrichtung mit mineralisolierten Mantelleitungen,
- Figur 2: eine Prinzipdarstellung der thermischen Verhältnisse einer Temperaturmesseinrichtung mit einem Koppelelement

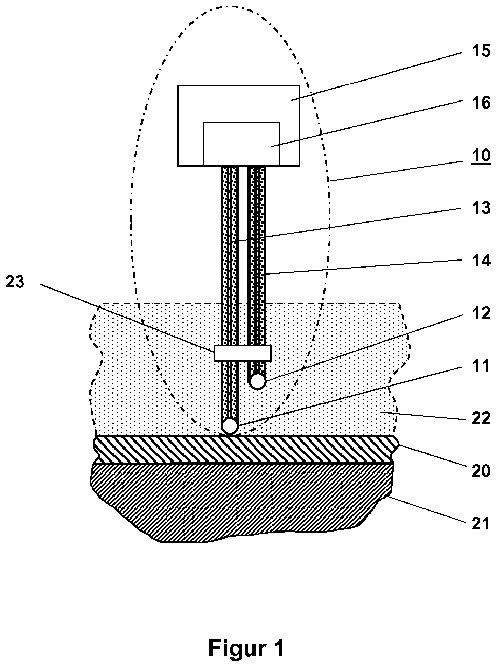

In der Figur 1 ist eine Temperaturmesseinrichtung **10** mit ihren erfindungswesentlichen Bestandteilen prinzipiell an einer geschnitten dargestellten Behälterwand **20** gezeigt. Die Temperaturmesseinrichtung **10** besteht im Wesentlichen aus einem Kopfgehäuse **15**, in welchem Messwertverarbeitungsmittel **16** untergebracht sind. Ein Messsensor **11** ist über eine Zuleitung **13** mit dem Messwertverarbeitungsmittel **16** im Kopfgehäuse **15** verbunden. Darüber hinaus ist ein Referenzsensor **12** über eine separate Zuleitung **14** mit dem Messwertverarbeitungsmittel **16** im Kopfgehäuse **15** verbunden.

Weiterhin ist eine Messstelle zur Bestimmung der Temperatur eines Mediums **21** dargestellt, welches in einem Behälter eingeschlossen ist. Dazu ist repräsentativ ein Ausschnitt einer Behälterwand **20** des Behälters an der Messstelle gezeigt.

Die Temperaturmesseinrichtung **10** ist außerhalb des Behälters - in der Zeichenebene oberhalb der Behälterwand **20** - an der Messstelle angeordnet und das Medium **21** ist innerhalb des Behälters - in der Zeichenebene unterhalb der Behälterwand **20** - eingeschlossen.

Der Behälter kann auf der äußeren Oberfläche der Behälterwand **20** eine thermische Isolationsschicht **22** aufweisen, welche einen Wärmefluss zwischen der äußeren Oberfläche der Behälterwand **20** und der Umgebung zumindest reduziert.

Zur Bestimmung der Mediumstemperatur ist die Temperaturmesseinrichtung **10** an der Messstelle derart angeordnet, dass sich der Messsensor **11** nahe der das Medium **21** umschließenden Oberfläche der Behälterwand **20** befindet.

Die Zuleitung **13** zum Messsensor **11** ist als für sich bekannte, mineralisolierte Mantelleitung mit einem Außenmantel aus Metall, wobei der Außenmantel mindestens zwei Innenleiter umschließt, welche mit hochkomprimiertem Metalloxidpulver gegen den Außenmantel isoliert sind,ausgebildet. Der Wärmewiderstand einer derartigen mineralisolierte Mantelleitung ist bauartbedingt ungefähr proportional zu seiner Länge.

In dieser Ausführungsform ist der Messsensor **11** vorteilhaft als Thermoelement ausgeführt, dessen Messspitze in Kontakt mit der Behälterwand **20** gebracht ist. Insbesondere kann vorgesehen sein, die Messspitze mit einer Silbereinlage auszustatten oder Silberspitze auszubilden. Vorteilhafterweise wird dadurch der Wärmewidestand **R3** auf ein Minimum reduziert.

Die Zuleitung **14** zum Referenzsensor **12** ist als für sich bekannte, mineralisolierte Mantelleitung mit einem Außenmantel aus Metall, wobei der Außenmantel mindestens zwei Innenleiter umschließt, welche mit hochkomprimiertem Metalloxidpulver gegen den Außenmantel isoliert sind,ausgebildet. Der Wärmewiderstand einer derartigen mineralisolierte Mantelleitung ist bauartbedingt ungefähr proportional zu seiner Länge.

Die Zuleitung **14** zum Referenzsensor **12** ist thermisch mit der Zuleitung **13** zum Messsensor **11** nahe der Messtelle mit einem Koppelelement **23** verbunden. In bevorzugter Ausgestaltung der Erfindung ist vorgesehen, dass das Koppelelement **23** die Außenmäntel der Mantelleitungen der Zuleitungen **13** und **14** umschließt. In einfachster Ausgestaltung der Erfindung genügt es, wenn das Koppelelement **23** die Außenmäntel der Mantelleitungen der Zuleitungen **13** und **14** berührt.

In bevorzugter Ausgestaltung der Erfindung besteht das Koppelelement **23** aus Metall. Darüber hinaus sind aber auch Keramiken oder Kunststoffe prinzipiell als Koppelelement **23** geeignet.

Somit ist sowohl der Messsensor **11** als auch der Referenzsensor **12** über bekannte Wärmewiderstände mit dem Koppelelement **23** verbunden.

Der geometrische Abstand des Referenzsensors **12** vom Messsensor **11** ist kleiner als der geometrische Abstand des Referenzsensors **12** vom Messwertverarbeitungsmittel **16** im Kopfgehäuse **15**. Vorzugsweise ist der Referenzsensor **12** nahe dem Koppelelement **23** angeordnet. Wegen der Proportionalität des Wärmewiderstands der mineralisolierten Mantelleitung der Zuleitung **13** zum Messsensor **11** ist jedenfalls das Verhältnis der Wärmewiderstände **R1/R2** > 1. Besonders vorteilhaft sind alle Verhältnisse der Wärmewiderstände **R1/R2** > 10. Dabei ist der Referenzsensor **12** in unmittelbarer Nähe zum Messsensor **11** angeordnet.

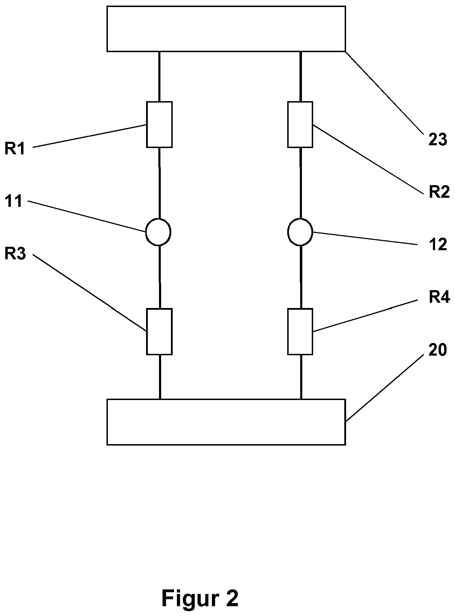

In der Figur 2 ist unter Verwendung gleicher Bezugszeichen für gleiche Mittel eine Prinzipdarstellung der thermischen Verhältnisse einer Temperaturmesseinrichtung **10** mit einem Koppelelement **23** gezeigt. Im Einzelnen sind der Messsensor **11** und der Referenzsensor **12** zwischen der Behälterwand **20** und dem Koppelelement **23** angeordnet.

Der Messsensor **11** weist einen Wärmewiderstand **R1** zum Koppelelement **23** und einen Wärmewiderstand **R3** zur Messstelle an der Behälterwand **20** auf.

Der Referenzsensor **12** weist einen Wärmewiderstand **R2** zum Koppelelement **23** und einen Wärmewiderstand **R4** zur Messstelle an der Behälterwand **20** auf.

Zumindest ist der Wärmewiderstand **R1** zwischen dem mindestens einen Messsensor **11** und dem Koppelelement **23** größer ist als der Wärmewiderstand **R2** zwischen dem mindestens einen Referenzsensor **12** und dem Koppelelement **23,** also **R1/R2** > 1.

Vorteilhafterweise ist der Wärmewiderstand **R4** zwischen dem mindestens einen Referenzsensor **12** und der Messstelle an der Behälterwand **20** größer ist als der Wärmewiderstand **R3** zwischen dem mindestens einen Messsensor **11** und der Messstelle an der Behälterwand **20,** also **R4/R3** < 1.

Besonders vorteilhaft ist das Verhältnis des Wärmewiderstands **R1** zwischen dem Messsensor **11** und dem Koppelelement **23** und des Wärmewiderstands **R3** zwischen dem Messsensor **11** und der Messstelle auf der das Medium umschließenden Oberfläche größer ist als das Verhältnis des Wärmewiderstands **R2** zwischen dem Referenzsensor **12** und dem Koppelelement **23** und des Wärmewiderstands **R4** zwischen dem Referenzsensor **12** und der Messstelle auf der das Medium umschließenden Oberfläche **R1/R3** > **R2/R4.**

### Bezugszeichenliste

- 10: Temperaturmesseinrichtung
- 11: Messsensor
- 12: Referenzsensor
- 13: Zuleitung zum Messsensor
- 14: Zuleitung zum Referenzsensor
- 15: Kopfgehäuse
- 16: Messwertverarbeitungsmittel

- 20: Behälterwand
- 21: Medium
- 22: Isolationsschicht
- 23: Koppelelement

- R1, R2, R3, R4: Wärmewiderstand

## Patentansprüche

1. Temperaturmesseinrichtung (10) zur Bestimmung einer Mediumstemperatur über die Temperatur einer Messstelle auf einer das Medium umschließenden Oberfläche, umfassend mindestens einen Messsensor (11) und mindestens einen Referenzsensor (12) sowie Messwertverarbeitungsmittel (16), welche über eine erste Zuleitung (13) mit dem Messsensor (11) und über eine zweite Zuleitung (14) mit dem Referenzsensor (12) verbunden ist, wobei
- die erste und zweite Zuleitung (13, 14) jeweils mit einem Außenmantel ausgebildet ist, wobei der Außenmantel mindestens zwei Innenleiter umschließt,
- der mindestens eine Messsensor (11) mit den Innenleitern der ersten Zuleitung (13) sowie der mindestens eine Referenzsensor (12) mit den Innenleitern der zweiten Zuleitung (14) verbunden ist,
- der Außenmantel der ersten Zuleitung (13) mit dem Außenmantel der zweiten Zuleitung (14) nahe der Messstelle auf der das Medium umschließenden Oberfläche mit mindestens einem Koppelelement (23) verbunden ist, wobei der Messsensor (11) und der Referenzsensor in verschiedenen Abständen mit demselben wärmeleitfähigen Koppelelement thermisch verbunden sind,
- der mindestens eine Messsensor (11) und der mindestens eine Referenzsensor (12) zwischen der das Medium umschließenden Oberfläche und dem Koppelelement (23) angeordnet sind, und
- der Wärmewiderstand (R1) zwischen dem mindestens einen Messsensor (11) und dem Koppelelement (23) größer ist als der Wärmewiderstand (R2) zwischen dem mindestens einen Referenzsensor (12) und dem Koppelelement (23), und dass der Wärmewiderstand (R3) zwischen dem Messsensor (11) und der Messstelle auf der das Medium umschließenden Oberfläche kleiner ist als der Wärmewiderstand (R4) zwischen dem Referenzsensor (12) und der Messstelle auf der das Medium umschließenden Oberfläche,
**dadurch gekennzeichnet,**
**dass** die erste und zweite Zuleitung (13, 14) jeweils als mineralisolierte Mantelleitung mit einem Außenmantel aus Metall ausgebildet ist, wobei die mindestens zwei Innenleiter mit hochkomprimiertem Metalloxidpulver gegen den Außenmantel isoliert sind, wobei auf dem hauptsächlichen thermischen Verbindungspfad zwischen der Messtelle und der Umgebung mindestens ein weiterer Referenzsensor angeordnet ist.

2. Temperaturmesseinrichtung (10) nach Anspruch 1
**dadurch gekennzeichnet,**
**dass** das Verhältnis des Wärmewiderstands (R1) zwischen dem Messsensor (11) und dem Koppelelement (23) und des Wärmewiderstands (R2) zwischen dem Referenzsensor (12) und dem Koppelelement (23) R1/R2 > 10 ist.

3. Temperaturmesseinrichtung (10) nach Anspruch 1
**dadurch gekennzeichnet,**
**dass** das Verhältnis des Wärmewiderstands (R1) zwischen dem Messsensor (11) und dem Koppelelement (23) und des Wärmewiderstands (R2) zwischen dem Referenzsensor (12) und dem Koppelelement (23) R1/R2 > 50 ist.

4. Temperaturmesseinrichtung (10) nach Anspruch 1
**dadurch gekennzeichnet,**
**dass** das Verhältnis des Wärmewiderstands (R4) zwischen dem Referenzsensor (12) und der Messstelle auf der das Medium umschließenden Oberfläche und des Wärmewiderstands (R3) zwischen dem Messsensor (11) und der Messstelle auf der das Medium umschließenden Oberfläche R4/R3 > 10 ist.

5. Temperaturmesseinrichtung (10) nach Anspruch 1
**dadurch gekennzeichnet,**
**dass** das Verhältnis des Wärmewiderstands (R4) zwischen dem Referenzsensor (12) und der Messstelle auf der das Medium umschließenden Oberfläche und des Wärmewiderstands (R3) zwischen dem Messsensor (11) und der Messstelle auf der das Medium umschließenden Oberfläche R4/R3 > 50 ist.

6. Temperaturmesseinrichtung (10) nach Anspruch 1
**dadurch gekennzeichnet,**
**dass** das Verhältnis des Wärmewiderstands (R1) zwischen dem Messsensor (11) und dem Koppelelement (23) und des Wärmewiderstands (R3) zwischen dem Messsensor (11) und der Messstelle auf der das Medium umschließenden Oberfläche größer ist als das Verhältnis des Wärmewiderstands (R2) zwischen dem Referenzsensor (12) und dem Koppelelement (23) und des Wärmewiderstands (R4) zwischen dem Referenzsensor (12) und der Messstelle auf der das Medium umschließenden Oberfläche R1/R3 > R2/R4.

## Claims

1. Temperature measuring device (10) for determining a medium temperature via the temperature of a measuring point on a surface enclosing the medium, comprising at least one measuring sensor (11) and at least one reference sensor (12) as well as measured value processing means (16), which is connected to the measuring sensor (11) via a first supply line (13) and to the reference sensor (12) via a second supply line (14), wherein
- the first and second supply line (13, 14) are each formed with an outer sheath, the outer sheath enclosing at least two inner conductors,
- the at least one measuring sensor (11) is connected to the inner conductors of the first supply line (13) and the at least one reference sensor (12) is connected to the inner conductors of the second supply line (14),
- the outer sheath of the first supply line (13) is connected to the outer sheath of the second supply line (14) near the measuring point on the surface enclosing the medium by means of at least one coupling element (23), the measuring sensor (11) and the reference sensor being thermally connected to the same thermally conductive coupling element at different distances,
- the at least one measuring sensor (11) and the at least one reference sensor (12) are arranged between the surface enclosing the medium and the coupling element (23), and
- the thermal resistance (R1) between the at least one measuring sensor (11) and the coupling element (23) is greater than the thermal resistance (R2) between the at least one reference sensor (12) and the coupling element (23), and in that the thermal resistance (R3) between the measuring sensor (11) and the measuring point on the surface enclosing the medium is smaller than the thermal resistance (R4) between the reference sensor (12) and the measuring point on the surface enclosing the medium,
**characterized in that**
the first and second supply line (13, 14) are each designed as a mineral-insulated sheathed cable with an outer sheath made of metal, the at least two inner conductors being insulated from the outer sheath with highly compressed metal oxide powder, at least one further reference sensor being arranged on the main thermal connection path between the measuring point and the environment.

2. Temperature measuring device (10) according to claim 1
**characterized in**
**that** the ratio of the thermal resistance (R1) between the measuring sensor (11) and the coupling element (23) and the thermal resistance (R2) between the reference sensor (12) and the coupling element (23) is R1/R2 > 10.

3. Temperature measuring device (10) according to claim 1
**characterized in**
**that** the ratio of the thermal resistance (R1) between the measuring sensor (11) and the coupling element (23) and the thermal resistance (R2) between the reference sensor (12) and the coupling element (23) is R1/R2 > 50.

4. Temperature measuring device (10) according to claim 1
**characterized in**
**that** the ratio of the thermal resistance (R4) between the reference sensor (12) and the measuring point on the surface enclosing the medium and the thermal resistance (R3) between the measuring sensor (11) and the measuring point on the surface R4/R3 enclosing the medium is > 10.

5. Temperature measuring device (10) according to claim 1
**characterized in**
**that** the ratio of the thermal resistance (R4) between the reference sensor (12) and the measuring point on the surface enclosing the medium and the thermal resistance (R3) between the measuring sensor (11) and the measuring point on the surface R4/R3 enclosing the medium is > 50.

6. Temperature measuring device (10) according to claim 1
**characterized in**
**that** the ratio of the thermal resistance (R1) between the measuring sensor (11) and the coupling element (23) and the thermal resistance (R3) between the measuring sensor (11) and the measuring point on the surface enclosing the medium is greater than the ratio of the thermal resistance (R2) between the reference sensor (12) and the coupling element (23) and the thermal resistance (R4) between the reference sensor (12) and the measuring point on the surface enclosing the medium R1/R3 > R2/R4.

## Revendications

1. Dispositif de mesure de température (10) destiné à déterminer une température de fluide par le biais de la température d'un point de mesure sur une surface qui entoure le fluide, comportant au moins un capteur de mesure (11) et au moins un capteur de référence (12) ainsi qu'un moyen de traitement de valeur mesurée (16), lequel est relié au capteur de mesure (11) par le biais d'une première ligne d'arrivée (13) et au capteur de référence (12) par le biais d'une deuxième ligne d'arrivée (14),
- la première et la deuxième ligne d'arrivée (13, 14) sont respectivement configurées avec une gaine extérieure, la gaine extérieure entourant au moins deux conducteurs intérieurs,
- l'au moins un capteur de mesure (11) étant relié aux conducteurs intérieurs de la première ligne d'arrivée (13) et l'au moins un capteur de référence (12) aux conducteurs intérieurs de la deuxième ligne d'arrivée (14),
- la gaine extérieure de la première ligne d'arrivée (13) étant reliée à la gaine extérieure de la deuxième ligne d'arrivée (14) par au moins un élément d'accouplement (23) à proximité du point de mesure sur la surface qui entoure le fluide, le capteur de mesure (11) et le capteur de référence étant reliés thermiquement au même élément d'accouplement conducteur de chaleur à des écarts différents,
- l'au moins un capteur de mesure (11) et l'au moins un capteur de référence (12) étant disposés entre la surface qui entoure le fluide et l'élément d'accouplement (23), et
- la résistance thermique (R1) entre l'au moins un capteur de mesure (11) et l'élément d'accouplement (23) étant supérieure à la résistance thermique (R2) entre l'au moins un capteur de référence (12) et l'élément d'accouplement (23), et la résistance thermique (R3) entre le capteur de mesure (11) et le point de mesure sur la surface qui entoure le fluide étant inférieure à la résistance thermique (R4) entre le capteur de référence (12) et le point de mesure sur la surface qui entoure le fluide,
caractérisé en ce
la première et la deuxième ligne d'arrivée (13, 14) sont respectivement réalisées sous la forme d'une ligne gainée avec une gaine extérieure en métal, les au moins deux conducteurs intérieurs étant isolés avec de la poudre d'oxyde métallique hautement comprimée par rapport à la gaine extérieure, au moins un capteur de référence supplémentaire étant disposé sur le chemin de liaison principalement thermique entre le point de mesure et l'environnement.

2. Dispositif de mesure de température (10) selon la revendication 1,
**caractérisé en ce**
**que** le rapport de la résistance thermique (R1) entre le capteur de mesure (11) et l'élément d'accouplement (23) par la résistance thermique (R2) entre le capteur de référence (12) et l'élément d'accouplement (23) est R1/R2 > 10.

3. Dispositif de mesure de température (10) selon la revendication 1,
**caractérisé en ce**
**que** le rapport de la résistance thermique (R1) entre le capteur de mesure (11) et l'élément d'accouplement (23) par la résistance thermique (R2) entre le capteur de référence (12) et l'élément d'accouplement (23) est R1/R2 > 50.

4. Dispositif de mesure de température (10) selon la revendication 1,
**caractérisé en ce**
**que** le rapport de la résistance thermique (R4) entre le capteur de référence (12) et le point de mesure sur la surface qui entoure le fluide par la résistance thermique (R3) entre le capteur de mesure (11) et le point de mesure sur la surface qui entoure le fluide est R4/R3 > 10.

5. Dispositif de mesure de température (10) selon la revendication 1,
**caractérisé en ce**
**que** le rapport de la résistance thermique (R4) entre le capteur de référence (12) et le point de mesure sur la surface qui entoure le fluide par la résistance thermique (R3) entre le capteur de mesure (11) et le point de mesure sur la surface qui entoure le fluide est R4/R3 > 50.

6. Dispositif de mesure de température (10) selon la revendication 1,
**caractérisé en ce**
**que** le rapport de la résistance thermique (R1) entre le capteur de mesure (11) et l'élément d'accouplement (23) par la résistance thermique (R3) entre le capteur de mesure (11) et le point de mesure sur la surface qui entoure le fluide est supérieur au rapport de la résistance thermique (R2) entre le capteur de référence (12) et l'élément d'accouplement (23) par la résistance thermique (R4) entre le capteur de référence (12) et le point de mesure sur la surface qui entoure le fluide R1/R3 > R2/R4.
